# EUROPEAN PATENT APPLICATION

(11) **EP 3 761 154 A1**
(43) Date of publication of application: **06.01.2021**
(21) Application number: 19761491.0
(22) Date of filing: 01.03.2019
(51) Int. Cl.: G06F 3/01

(54) **SMART TERMINAL, SENSING CONTROL METHOD THEREFOR, AND APPARATUS HAVING STORAGE FUNCTION**

(30) Priority: 01.03.2018 CN 201810170954
(71) Applicant: Huizhou TCL Mobile Communication Co., Ltd, Guangdong 516006 (CN)
(72) Inventor: WANG, Kaidi, Huizhou, Guangdong 516006 (CN)
(74) Representative: Murgitroyd & Company
(86) International application number: PCT/CN2019/076648
(87) International publication number: WO 2019/166005

(57) **Abstract**

Disclosed are a smart terminal, a sensing control method therefor and an apparatus having a storage function; the sensing control method comprises: utilizing a smart terminal that is worn on the head of a user to display a virtual reality scene; acquiring altitude data of the smart terminal; determining a point of intersection between the line-of-sight of the user and the virtual reality scene according to the altitude data; and executing a corresponding operation for content that is displayed at the position of the point of intersection in the virtual reality scene.

## Description

This application claims the priority of Chinese Patent Application No. 201810170954.5, entitled "SMART TERMINAL, SENSING CONTROL METHOD THEREFOR, AND APPARATUS HAVING STORAGE FUNCTION", filed on March 1, 2018 in the CNIPA (National Intellectual Property Administration, PRC), the disclosure of which is incorporated herein by reference in its entirety.

### TECHNICAL FIELD

The present disclosure relates to a technology field of virtual reality, and more particularly to a smart terminal and a sensing and control thereof and a device having a storage function.

### BACKGROUND

Virtual reality (VR) technology is a computer simulation system which can establish and experience a virtual world. The virtual reality technology uses a computer to generate a 3D virtual world and provides simulations of vision, hearing, touch and other senses for a user, thereby causing the user to immerse in the virtual world. Usually, it is necessary to wear a head-mounted display in a virtual reality. Certainly, a smart terminal can implement a virtual reality experience using an external device, for example, Google Cardboard, Samsung Gear VR and so on.

Usually, it is necessary to install a specific VR application and a corresponding BLUETOOTH external device to control a device. An application in a smart terminal, for example, a player or a library, is designed for an operation method of a touch screen. When the BLUETOOTH external device is used to control the device, an icon of the application can be selected and controlled only in a situation that the BLUETOOTH external device is moved left and right many times. In some interfaces, there is no design of acquiring an intersection state of the icon of the application, so that the user does not recognize a current moving position of an intersection and cannot operate the device.

### SUMMARY OF DISCLOSURE

Embodiments of the present disclosure provide a smart terminal and a sensing and control thereof and a device having a storage function. By the sensing and control method, an operation is performed on a display content in a virtual reality scene more intuitively and flexibly, thereby increasing convenience of the user's operations in the virtual reality scene.

The present disclosure adopts the following technical schemes to solve the above-mentioned technical problem.

In a first aspect, an embodiment of the present disclosure provides a sensing and control method based on virtual reality. The sensing and control method includes: displaying a virtual reality scene by a smart terminal worn on a user's head; acquiring position and pose data of the smart terminal; determining an intersection point of the user's viewing angle and the virtual reality scene according to the position and pose data; and performing a corresponding operation on a display content positioned at the intersection point in the virtual reality scene.

The step of determining the intersection point of the user's viewing angle and the virtual reality scene according to the position and pose data includes:
determining a transformation relationship between the user' viewing angle and a predetermined reference direction of the smart terminal when the smart terminal is worn on the user's head;
determining a position and pose description of the predetermined reference direction of the smart terminal according to the position and pose data; and
determining a position and pose description of the user's viewing angle according to the position and pose description of the predetermined reference direction and the transformation relationship.

The step of determining the intersection point of the user's viewing angle and the virtual reality scene according to the position and pose data includes:
mapping the virtual reality scene to a spatial model, wherein the spatial model is established in a world coordinate system;
calculating a position and pose description of the user's viewing angle in the world coordinate system according to the position and pose data of the smart terminal; and
determining the intersection point of the user's viewing angle and the virtual reality scene in the spatial model according to the position and pose description.

The step of performing the corresponding operation on the display content positioned at the intersection point in the virtual reality scene includes:
determining whether the intersection point coincides with a graphic control in the virtual reality scene;
further determining whether to receive a trigger signal when the intersection point coincides with the graphic control; and
outputting a touch operation signal to the graphic control when the trigger signal is received.

The sensing and control method of claim 4, wherein after the step of further determining whether to receive the trigger signal when the intersection point coincides with the graphic control, the sensing and control method further includes:
outputting a hover operation signal to the graphic control when the trigger signal is not received.

The sensing and control method of claim 4, wherein the smart terminal is disposed in VR glasses, the VR glasses include at least one physical button, the physical button is disposed a touch screen of the smart terminal, and the physical button presses the touch screen of the smart terminal when the physical button of the VR glasses is pressed; and
the step of determining whether to receive the trigger signal includes:
determining whether the touch screen of the smart terminal detects the trigger signal generated by the pressing of the physical button.

The position and pose data includes at least one of data of position and data of pose.

The step of acquiring the position and pose data of the smart terminal includes:
adjusting the virtual reality scene according to the position and pose data of the smart terminal.

In a second aspect, an embodiment of the present disclosure provides a smart terminal. The smart terminal includes a processor and a storage device connected to the processor. The storage device stores program instructions which are executed by the processor and intermediate data which is generated when the processor executes the program instructions. The processor executes the program instructions to implement the following steps of:
displaying a virtual reality scene by a smart terminal worn on a user's head;
acquiring position and pose data of the smart terminal;
determining an intersection point of the user's viewing angle and the virtual reality scene according to the position and pose data; and
performing a corresponding operation on a display content positioned at the intersection point in the virtual reality scene.

The step of determining the intersection point of the user's viewing angle and the virtual reality scene according to the position and pose data includes:
mapping the virtual reality scene to a spatial model, wherein the spatial model is established in a world coordinate system;
calculating a position and pose description of the user's viewing angle in the world coordinate system according to the position and pose data of the smart terminal; and
determining the intersection point of the user's viewing angle and the virtual reality scene in the spatial model according to the position and pose description.

The step of performing the corresponding operation on the display content positioned at the intersection point in the virtual reality scene includes:
determining whether the intersection point coincides with a graphic control in the virtual reality scene;
further determining whether to receive a trigger signal when the intersection point coincides with the graphic control; and
outputting a touch operation signal to the graphic control when the trigger signal is received.

After the step of further determining whether to receive the trigger signal when the intersection point coincides with the graphic control, the sensing and control method further includes:
outputting a hover operation signal to the graphic control when the trigger signal is not received.

The smart terminal is disposed in VR glasses, the VR glasses include at least one physical button, the physical button is disposed a touch screen of the smart terminal, and the physical button presses the touch screen of the smart terminal when the physical button of the VR glasses is pressed; and
the step of determining whether to receive the trigger signal includes:
determining whether the touch screen of the smart terminal detects the trigger signal generated by the pressing of the physical button.

In a third aspect, an embodiment of the present disclosure provides a device having a storage function. The device includes program instructions stored therein. The program instructions are capable of being executed to implement the following steps of:
displaying a virtual reality scene by a smart terminal worn on a user's head;
acquiring position and pose data of the smart terminal;
determining an intersection point of the user's viewing angle and the virtual reality scene according to the position and pose data; and
performing a corresponding operation on a display content positioned at the intersection point in the virtual reality scene.

The step of determining the intersection point of the user's viewing angle and the virtual reality scene according to the position and pose data includes:
determining a transformation relationship between the user' viewing angle and a predetermined reference direction of the smart terminal when the smart terminal is worn on the user's head;
determining a position and pose description of the predetermined reference direction of the smart terminal according to the position and pose data; and
determining a position and pose description of the user's viewing angle according to the position and pose description of the predetermined reference direction and the transformation relationship.

The step of determining the intersection point of the user's viewing angle and the virtual reality scene according to the position and pose data includes:
mapping the virtual reality scene to a spatial model, wherein the spatial model is established in a world coordinate system;
calculating a position and pose description of the user's viewing angle in the world coordinate system according to the position and pose data of the smart terminal; and
determining the intersection point of the user's viewing angle and the virtual reality scene in the spatial model according to the position and pose description.

The step of performing the corresponding operation on the display content positioned at the intersection point in the virtual reality scene includes:
determining whether the intersection point coincides with a graphic control in the virtual reality scene;
further determining whether to receive a trigger signal when the intersection point coincides with the graphic control; and
outputting a touch operation signal to the graphic control when the trigger signal is received.

After the step of further determining whether to receive the trigger signal when the intersection point coincides with the graphic control, the sensing and control method further includes:
outputting a hover operation signal to the graphic control when the trigger signal is not received.

The smart terminal is disposed in VR glasses, the VR glasses include at least one physical button, the physical button is disposed a touch screen of the smart terminal, and the physical button presses the touch screen of the smart terminal when the physical button of the VR glasses is pressed; and
the step of determining whether to receive the trigger signal includes:
determining whether the touch screen of the smart terminal detects the trigger signal generated by the pressing of the physical button.

The step of acquiring the position and pose data of the smart terminal includes:
adjusting the virtual reality scene according to the position and pose data of the smart terminal.

Advantageous effect is described as follows. The sensing and control method based on virtual reality includes: displaying a virtual reality scene by a smart terminal worn on a user's head; acquiring position and pose data of the smart terminal; determining an intersection point of the user's viewing angle and the virtual reality scene according to the position and pose data; and performing a corresponding operation on a display content positioned at the intersection point in the virtual reality scene. The sensing and control method of the present disclosure determines a direction of the user's viewing angle by the position and pose data of the smart terminal, calculates and determines a position of the intersection point of the direction of the user's viewing angle and the virtual reality scene, and performs the corresponding operation on the display content positioned at the intersection point in the virtual reality scene. The operation is performed on the display content in the virtual reality scene more intuitively and flexibly in combination with motion characteristics of the user' head, thereby increasing convenience of the user's operations in the virtual reality scene.

### BRIEF DESCRIPTION OF DRAWINGS

FIG 1 illustrates a flowchart of a sensing and control method based on virtual reality in accordance with an embodiment of the present disclosure.
FIG 2 illustrates a flowchart of a sensing and control method based on virtual reality in accordance with a detailed embodiment of the present disclosure.
FIG 3 illustrates a structural diagram of a smart terminal in accordance with an embodiment of the present disclosure.
FIG 4 illustrates a structural diagram of a device having a storage function in accordance with an embodiment of the present disclosure.

### DETAILED DESCRIPTION OF EMBODIMENTS

The present disclosure provides a smart terminal and a sensing and control method thereof and a device having a storage function. To make the objectives, technical schemes, and technical effect of the present disclosure more clearly and definitely, the present disclosure will be described in details below by using embodiments in conjunction with the appending drawings. It should be understood that the specific embodiments described herein are merely for explaining the present disclosure but not intended to limit the present disclosure.

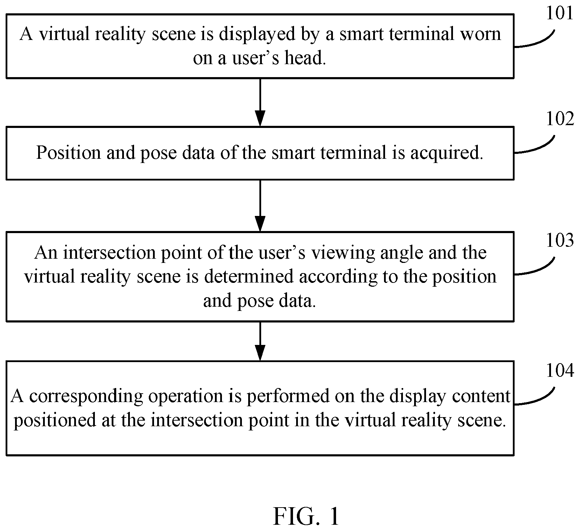

Please refer to FIG 1. FIG 1 illustrates a flowchart of a sensing and control method based on virtual reality in accordance with an embodiment of the present disclosure. In the present embodiment, the sensing and control method includes the following steps.

In step 101, a virtual reality scene is displayed by a smart terminal worn on a user's head.

In a specific application scenario, the smart terminal is disposed in VR glasses. The user can experience the virtual reality scene after wearing the VR glasses.

The smart terminal may be a smart phone.

In the present embodiment, the smart terminal worn on the user's head displays the virtual reality scene.

In step 102, position and pose data of the smart terminal is acquired.

In the present embodiment, when the user's viewing angle changes, the user's head correspondingly moves following the user's viewing angle, thereby driving the smart terminal worn on the user's head to move synchronously. For example, when the user's head rotates or moves translationally, the smart terminal also rotates or moves translationally.

Accordingly, the user's viewing angle can be determined according to the position and pose data of the smart terminal. The smart terminal acquires the position and pose data of the smart terminal. The position and pose data includes at least one of data of position and data of pose.

In detail, the smart terminal acquires the position and pose data via a position sensor and/or a motion sensor. The motion sensor includes a gyroscope, an accelerometer, or a gravity sensor and is mainly configured to monitor movement of the smart terminal, such as tilt and swing. The position sensor includes a geomagnetic sensor and is mainly configured to monitor a position of the smart terminal, that is, a position of the smart terminal relative to a world coordinate system.

In a specific application scenario, after the user's viewing angle changes, the virtual reality scene displayed by the smart terminal correspondingly changes as well, thereby enhancing the user's virtual reality experience. In detail, the virtual reality scene is adjusted according to the position and pose data of the smart terminal. For example, when the user's viewing angle moves toward the right, the virtual reality scene correspondingly moves toward the left. When the user's viewing angle moves toward the left, the virtual reality scene correspondingly moves toward the right.

In step 103, an intersection point of the user's viewing angle and the virtual reality scene is determined according to the position and pose data.

In one embodiment, the smart terminal determines a transformation relationship between the user' viewing angle and a predetermined reference direction of the smart terminal when the smart terminal is worn on the user's head, determines a position and pose description of the predetermined reference direction of the smart terminal according to the position and pose data of the smart terminal, determines a position and pose description of the user's viewing angle according to the position and pose description of the predetermined reference direction and the transformation relationship, and determines the intersection point of the user's viewing angle and the virtual reality scene according to the position and pose description of the user's viewing angle.

The predetermined reference direction of the smart terminal is a direction which is predefined and may be designed according to practical situations. In one embodiment, a direction at which a display screen of the smart terminal is located serves as the predetermined reference direction. Certainly, a direction perpendicular to a direction at which a display screen of the smart terminal is located may serve as the predetermined reference direction.

After the predetermined reference direction is determined, the smart terminal determines the position and pose description of the predetermined reference direction of the smart terminal according to the position and pose data the smart terminal. The position and pose description of the predetermined reference direction represents a shift quantity or a rotation quantity of the predetermined reference direction of the smart terminal. For example, when the predetermined reference direction is the direction at which the display screen of the smart terminal is located, the position and pose description of the predetermined reference direction represents a shift quantity or a rotation quantity of the direction at which the display screen of the smart terminal is located. In detail, the smart terminal performs a time integration of a detection result of an acceleration sensor or an angular velocity sensor to acquire the position and pose description of the predetermined reference direction of the smart terminal.

The smart terminal can determine the position and pose description of the user's viewing angle (that is, a direction of the user's viewing angle) according to the position and pose description of the predetermined reference direction and the transformation relationship between the predetermined reference direction of the smart terminal and the user' viewing angle.

In another embodiment, the smart terminal maps the virtual reality scene to a spatial model wherein the spatial model is established in the world coordinate system, calculates a position and pose description of the user's viewing angle in the world coordinate system according to the position and pose data of the smart terminal, and determines the intersection point of the user's viewing angle and the virtual reality scene in the spatial model according to the position and pose description.

In detail, the smart terminal initializes the sensor(s). After the smart terminal receives a signal that the display content has been refreshed, the smart terminal starts to draw a display interface, read initialization data of the sensor(s), map the virtual reality scene to the spatial model. The spatial model is established in the world coordinate system. Furthermore, the display content in the virtual reality scene is adjusted based on the data of the sensor(s), and the adjusted display content is displayed in a 3D form.

In the present embodiment, the smart terminal calculates the position and pose description of the user's viewing angle in the world coordinate system according to a rotation matrix and the position and pose data of the smart terminal. The position and pose description of the user's viewing angle in the world coordinate system reflects a direction of viewing angle at which the user's viewing angle is positioned on the earth or in a real environment. In one embodiment, the smart terminal includes an Android system. The smart terminal can determine the position and pose description of the user's viewing angle in the world coordinate system depending on the SensorManager.getRotationMatrix.

In step 104, a corresponding operation is performed on the display content positioned at the intersection point in the virtual reality scene.

In the present embodiment, the smart terminal performs the corresponding operation on the display content positioned at the intersection point in the virtual reality scene.

In detail, the smart terminal determines whether the intersection point of the user's viewing angle and the display content in the virtual reality scene exists according to the position and pose description of the user's viewing angle, determines whether the intersection point coincides with a graphic control in the virtual reality scene, further determines whether to receive a trigger signal when the intersection point coincides with the graphic control, and outputs a touch operation signal to the graphic control when the trigger signal is received. When the trigger signal is not received, a hover operation signal is outputted to the graphic control.

The graphic control may be an icon corresponding to an application program.

In a specific application scenario, the smart terminal is disposed in VR glasses. The VR glasses include at least one physical button. The physical button is disposed a touch screen of the smart terminal. The physical button presses the touch screen of the smart terminal when the physical button of the VR glasses is pressed. The smart terminal determines whether the touch screen of the smart terminal detects the trigger signal generated by the pressing of the physical button. When the trigger signal is received, the touch operation signal is outputted to the graphic control. When the trigger signal is not received, the hover operation signal is outputted to the graphic control.

The touch operation and the hover operation are described briefly as follows.

The user mainly operates the application program by touching the screen of the smart terminal. The smart terminal includes a complete mechanism to ensure that an operation event is transmitted to a corresponding component. Each component can acquire an operation event of the screen by registering a callback function and perform the corresponding event. In the present embodiment, the graphic control is selected by the intersection point of the user's viewing angle and the virtual reality scene. Then, the corresponding operation is determined according a state of the physical button of the VR glasses.

For example, the smart terminal includes an Android system. The operation event is packaged in the MotionEvent function. The function describes action codes of operations of the screen and a series of coordinate values. The action codes represent states changes when corresponding positions are pressed or released. The coordinate values describe changes of positions and other moving information.

In the present embodiment, when the physical button of the VR glasses is pressed, it represents that a corresponding position of the screen is pressed or released. The smart terminal performs the touch event. The smart terminal determines a coordinate value of the graphic control coinciding with the intersection point of the user's viewing angle and the virtual reality, thereby performing the touch operation on the graphic control. For example, the graphic control is opened or closed.

When the physical button of the VR glasses is not pressed, it represents that the corresponding position of the screen is not pressed or released. The smart terminal performs the hover event. The smart terminal determines a coordinate value of the graphic control coinciding with the intersection point of the user's viewing angle and the virtual reality, thereby performing the hover operation on the graphic control. That is, the graphic control is displayed as a hover state.

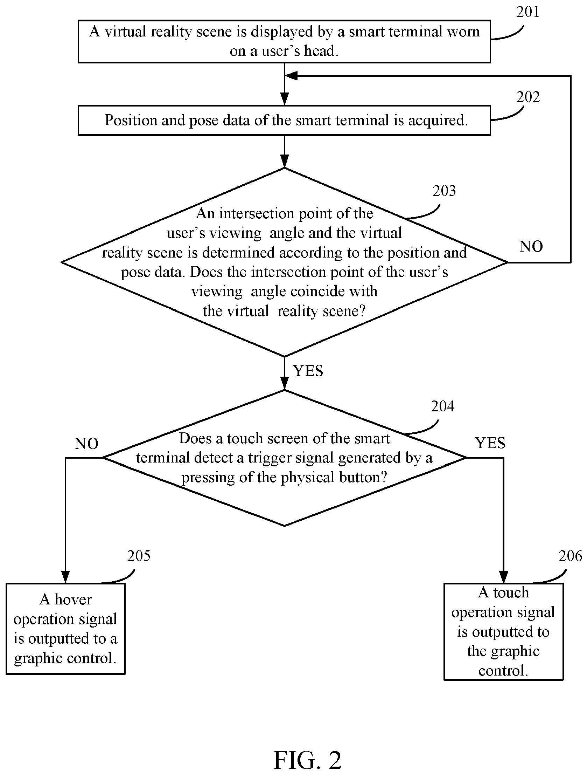

In order to describe the sensing and control method in the above-mentioned embodiment more intuitively, please refer to FIG 2. FIG 2 illustrates a flowchart of a sensing and control method based on virtual reality in accordance with a detailed embodiment of the present disclosure.

In step 201, a virtual reality scene is displayed by a smart terminal worn on a user's head.

The present step is the same as step 101 FIG .1. Detailed description can be referred to the corresponding description in step 101 and is not repeated herein.

In step 202, position and pose data of the smart terminal is acquired.

The present step is the same as step 102 in FIG .1. Detailed description can be referred to the corresponding description in step 102 and is not repeated herein.

In step 203, an intersection point of the user's viewing angle and the virtual reality scene is determined according to the position and pose data, and it is determined whether the intersection point of the user's viewing angle coincides with the virtual reality scene.

In one embodiment, the smart terminal determines a transformation relationship between the user' viewing angle and a predetermined reference direction of the smart terminal when the smart terminal is worn on the user's head, determines a position and pose description of the predetermined reference direction of the smart terminal according to the position and pose data, determines a position and pose description of the user's viewing angle according to the position and pose description of the predetermined reference direction and the transformation relationship, and determines the intersection point of the user's viewing angle and the virtual reality scene according to the position and pose description of the user's viewing angle.

In another embodiment, the smart terminal maps the virtual reality scene to a spatial model wherein the spatial model is established in the world coordinate system, calculates a position and pose description of the user's viewing angle in the world coordinate system according to the position and pose data of the smart terminal, and determines the intersection point of the user's viewing angle and the virtual reality scene in the spatial model according to the position and pose description.

When the intersection point of the user's viewing angle and the virtual reality scene does not exist, step 202 is performed.

When the intersection point of the user's viewing angle and the virtual reality scene exists, it is determined whether the intersection point coincides with a graphic control in the virtual reality scene.

In step 204, it is determined whether a touch screen of the smart terminal detects a trigger signal generated by a pressing of the physical button.

In the present embodiment, the smart terminal is disposed in VR glasses. The VR glasses include at least one physical button. The physical button is disposed the touch screen of the smart terminal. The physical button presses the touch screen of the smart terminal when the physical button of the VR glasses is pressed. The smart terminal determines whether the touch screen of the smart terminal detects the trigger signal generated by the pressing of the physical button. When the trigger signal is received, step 206 is performed. When the trigger signal is not received, step 205 is performed.

In step 205, a hover operation signal is outputted to a graphic control.

In step 206, a touch operation signal is outputted to the graphic control.

Steps 203-206 are the same as steps 103-104 FIG .1. Detailed description can be referred to the corresponding description in steps 103-104 and is not repeated herein.

Differing from the prior art, the sensing and control method based on virtual reality includes: displaying a virtual reality scene by a smart terminal worn on a user's head; acquiring position and pose data of the smart terminal; determining an intersection point of the user's viewing angle and the virtual reality scene according to the position and pose data; and performing a corresponding operation on a display content positioned at the intersection point in the virtual reality scene. The sensing and control method of the present disclosure determines a direction of the user's viewing angle by the position and pose data of the smart terminal, calculates and determines a position of the intersection point of the direction of the user's viewing angle and the virtual reality scene, and performs the corresponding operation on the display content positioned at the intersection point in the virtual reality scene. The operation is performed on the display content in the virtual reality scene more intuitively and flexibly in combination with motion characteristics of the user' head, thereby increasing convenience of the user's operations in the virtual reality scene.

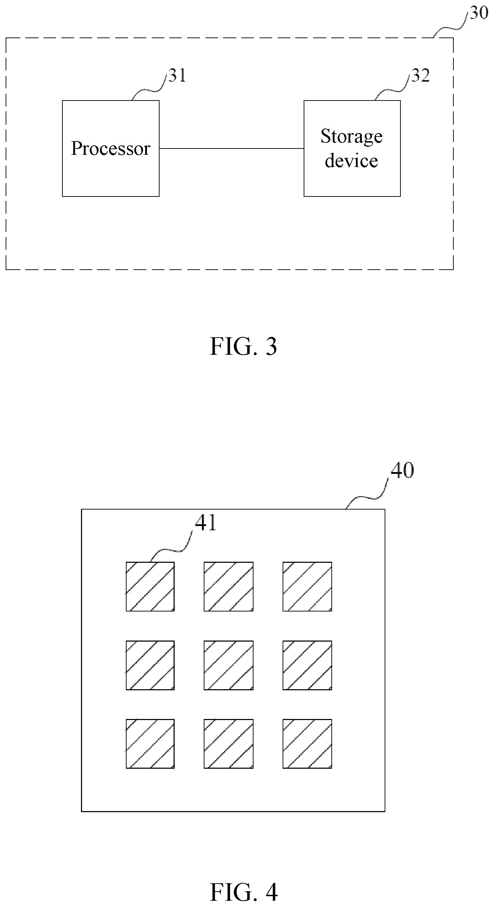

Please refer to FIG 3. FIG 3 illustrates a structural diagram of a smart terminal in accordance with an embodiment of the present disclosure. In the present embodiment, the smart terminal 30 includes a processor 31 and a storage device 32 connected to the processor 31.

The smart terminal 30 is a smart phone.

The storage device 32 stores program instructions which are executed by the processor 31 and intermediate data which is generated when the processor 31 executes the program instructions. The processor 31 executes the program instructions to implement the sensing and control method based on virtual reality of the present disclosure.

The sensing and control method is described as follows.

In a specific application scenario, the smart terminal 30 is disposed in VR glasses. A user can experience a virtual reality scene after wearing the VR glasses.

The smart terminal 30 may be a smart phone.

In the present embodiment, the processor 31 uses the smart terminal 30 worn on the user's head to display the virtual reality scene.

In the present embodiment, when the user's viewing angle changes, the user's head correspondingly moves following the user's viewing angle, thereby driving the smart terminal 30 worn on the user's head to move synchronously. For example, when the user's head rotates or moves translationally, the smart terminal 30 also rotates or moves translationally.

Accordingly, the user's viewing angle can be determined according to the position and pose data of the smart terminal 30. The processor 31 acquires the position and pose data of the smart terminal 30. The position and pose data includes at least one of data of position and data of pose.

In detail, the processor 31 acquires the position and pose data of the smart terminal 30 via a position sensor and/or a motion sensor. The motion sensor includes a gyroscope, an accelerometer, or a gravity sensor and is mainly configured to monitor movement of the smart terminal 30, such as tilt and swing. The position sensor includes a geomagnetic sensor and is mainly configured to monitor a position of the smart terminal 30, that is, a position of the smart terminal 30 relative to a world coordinate system.

In a specific application scenario, after the user's viewing angle changes, the virtual reality scene displayed by the processor 31 correspondingly changes as well, thereby enhancing the user's virtual reality experience. In detail, the processor 31 adjusts the virtual reality scene according to the position and pose data of the smart terminal 30. For example, when the user's viewing angle moves toward the right, the virtual reality scene correspondingly moves toward the left. When the user's viewing angle moves toward the left, the virtual reality scene correspondingly moves toward the right.

In one embodiment, the processor 31 determines a transformation relationship between the user' viewing angle and a predetermined reference direction of the smart terminal 30 when the smart terminal 30 is worn on the user's head, determines a position and pose description of the predetermined reference direction of the smart terminal 30 according to the position and pose data of the smart terminal, determines a position and pose description of the user's viewing angle according to the position and pose description of the predetermined reference direction and the transformation relationship, and determines the intersection point of the user's viewing angle and the virtual reality scene according to the position and pose description of the user's viewing angle.

The predetermined reference direction of the smart terminal 30 is a direction which is predefined and may be designed according to practical situations. In one embodiment, a direction at which a display screen of the smart terminal 30 is located serves as the predetermined reference direction. Certainly, a direction perpendicular to a direction at which a display screen of the smart terminal 30 is located may serve as the predetermined reference direction.

After the predetermined reference direction is determined, the processor 31 determines the position and pose description of the predetermined reference direction of the smart terminal 30 according to the position and pose data of the smart terminal 30. The position and pose description of the predetermined reference direction represents a shift quantity or a rotation quantity of the predetermined reference direction of the smart terminal 30. For example, when the predetermined reference direction is the direction at which the display screen of the smart terminal 30 is located, the position and pose description of the predetermined reference direction represents a shift quantity or a rotation quantity of the direction at which the display screen of the smart terminal 30 is located. In detail, the processor 31 performs a time integration of a detection result of an acceleration sensor or an angular velocity sensor to acquire the position and pose description of the predetermined reference direction of the smart terminal 30.

The processor 31 can determine the position and pose description of the user's viewing angle (that is, a direction of the user's viewing angle) according to the position and pose description of the predetermined reference direction and the transformation relationship between the predetermined reference direction of the smart terminal 30 and the user' viewing angle.

In another embodiment, the processor 31 maps the virtual reality scene to a spatial model wherein the spatial model is established in the world coordinate system, calculates a position and pose description of the user's viewing angle in the world coordinate system according to the position and pose data of the smart terminal 30, and determines the intersection point of the user's viewing angle and the virtual reality scene in the spatial model according to the position and pose description.

In detail, the processor 31 initializes the sensor(s) of the smart terminal 30. After the processor 31 receives a signal that the display content has been refreshed, the processor 31 starts to draw a display interface, read initialization data of the sensor(s), map the virtual reality scene to the spatial model. The spatial model is established in the world coordinate system. Furthermore, the display content in the virtual reality scene is adjusted based on the data of the sensor(s), and the adjusted display content is displayed in a 3D form.

In the present embodiment, the processor 31 calculates the position and pose description of the user's viewing angle in the world coordinate system according to a rotation matrix and the position and pose data of the smart terminal 30. The position and pose description of the user's viewing angle in the world coordinate system reflects a direction viewing angle at which the user's viewing angle is positioned on the earth or in a real environment. In one embodiment, the smart terminal 30 includes an Android system. The processor 31 can determine the position and pose description of the user's viewing angle in the world coordinate system depending on the SensorManager.getRotationMatrix.

In the present embodiment, the processor 31 performs the corresponding operation on the display content positioned at the intersection point in the virtual reality scene.

In detail, the processor 31 determines whether the intersection point of the user's viewing angle and the display content in the virtual reality scene exists according to the position and pose description of the user's viewing angle, determines whether the intersection point coincides with a graphic control in the virtual reality scene, further determines whether to receive a trigger signal when the intersection point coincides with the graphic control, and outputs a touch operation signal to the graphic control when the trigger signal is received. When the trigger signal is not received, a hover operation signal is outputted to the graphic control.

The graphic control may be an icon corresponding to an application program.

In a specific application scenario, the smart terminal 30 is disposed in VR glasses. The VR glasses include at least one physical button. The physical button is disposed a touch screen of the smart terminal 30. The physical button presses the touch screen of the smart terminal 30 when the physical button of the VR glasses is pressed. The processor 31 determines whether the touch screen of the smart terminal 30 detects the trigger signal generated by the pressing of the physical button. When the trigger signal is received, the touch operation signal is outputted to the graphic control. When the trigger signal is not received, the hover operation signal is outputted to the graphic control.

Differing from the prior art, the sensing and control method based on virtual reality includes: displaying a virtual reality scene by a smart terminal worn on a user's head; acquiring position and pose data of the smart terminal; determining an intersection point of the user's viewing angle and the virtual reality scene according to the position and pose data; and performing a corresponding operation on a display content positioned at the intersection point in the virtual reality scene. The sensing and control method of the present disclosure determines a direction of the user's viewing angle by the position and pose data of the smart terminal, calculates and determines a position of the intersection point of the direction of the user's viewing angle and the virtual reality scene, and performs the corresponding operation on the display content positioned at the intersection point in the virtual reality scene. The operation is performed on the display content in the virtual reality scene more intuitively and flexibly in combination with motion characteristics of the user' head, thereby increasing convenience of the user's operations in the virtual reality scene.

Please refer to FIG 4. FIG 4 illustrates a structural diagram of a device having a storage function in accordance with an embodiment of the present disclosure. In the present embodiment, the device 40 having the storage function includes program instructions 41 stored therein. The program instructions 41 are capable of being executed to implement the sensing and control method based on virtual reality of the present disclosure.

The sensing and control method is described in detailed as above. Detailed description can be referred to the corresponding description in FIG 1 and FIG 2 and is not repeated herein.

Differing from the prior art, the sensing and control method based on virtual reality includes: displaying a virtual reality scene by a smart terminal worn on a user's head; acquiring position and pose data of the smart terminal; determining an intersection point of the user's viewing angle and the virtual reality scene according to the position and pose data; and performing a corresponding operation on a display content positioned at the intersection point in the virtual reality scene. The sensing and control method of the present disclosure determines a direction of the user's viewing angle by the position and pose data of the smart terminal, calculates and determines a position of the intersection point of the direction of the user's viewing angle and the virtual reality scene, and performs the corresponding operation on the display content positioned at the intersection point in the virtual reality scene. The operation is performed on the display content in the virtual reality scene more intuitively and flexibly in combination with motion characteristics of the user' head, thereby increasing convenience of the user's operations in the virtual reality scene.

In several embodiments provided by the present disclosure, it should be understood that the disclosed method and device may be implemented in other ways. As an illustration, the embodiment of the device described above is merely illustrative. For example, the division of the module or the unit is only a logical function division and there are additional ways of actual implement, such as, multiple units or components may be combined or can be integrated into another system. Or, some features can be ignored or not executed. In addition, the coupling, the direct coupling or the communication connection shown or discussed may be either an indirect coupling or a communication connection through some interfaces, devices or units, or may be electrically, mechanically or otherwise connected.

The units described as the separation means may or may not be physically separated. The components shown as units may or may not be physical units, i.e., may be located in one place or may be distributed over a plurality of network units. The part or all of the units can be selected according to the actual demands to achieve the object of the present embodiment.

In addition, in various embodiments of the present disclosure, the functional units may be integrated in one processing module, or may separately and physically exist, or two or more units may be integrated in one module. The above-mentioned integrated module may be implemented by hardware, or may be implemented by software functional modules. When the integrated module is implemented in the form of software functional modules and sold or used as independent products, the integrated module may be stored in a computer readable storage medium.

Based on such understandings, the technical solution, the contribution to the prior art, or some portions or all of the technical solution of the present disclosure may be represented in the form of a software product which can be stored in computer storage media. The software product may include computer-executable instruction stored in the computer storage media that are executable by a computing device (such as a personal computer (PC), a server, or a network device) that implements each embodiment of the present disclosure or methods described in some portions of the embodiments. The foregoing storage media include any medium that can store program code, such as a USB flash disk, a removable hard disk, a read-only memory (ROM), a random access memory (RAM), a magnetic disk, an optical disc, or the like.

The foregoing description is merely the embodiments of the present disclosure, and is not intended to limit the scope of the present disclosure. An equivalent structure or equivalent process alternation made by using the content of the specification and drawings of the present disclosure, or an application of the content of the specification and drawings directly or indirectly to another related technical field, shall fall within the protection scope of the present disclosure.

## Claims

1. A sensing and control method based on virtual reality, wherein the sensing and control method comprises:
displaying a virtual reality scene by a smart terminal worn on a user's head;
acquiring position and pose data of the smart terminal;
determining an intersection point of the user's viewing angle and the virtual reality scene according to the position and pose data; and
performing a corresponding operation on a display content positioned at the intersection point in the virtual reality scene.

2. The sensing and control method of claim 1, wherein the step of determining the intersection point of the user's viewing angle and the virtual reality scene according to the position and pose data comprises:
determining a transformation relationship between the user' viewing angle and a predetermined reference direction of the smart terminal when the smart terminal is worn on the user's head;
determining a position and pose description of the predetermined reference direction of the smart terminal according to the position and pose data; and
determining a position and pose description of the user's viewing angle according to the position and pose description of the predetermined reference direction and the transformation relationship.

3. The sensing and control method of claim 1, wherein the step of determining the intersection point of the user's viewing angle and the virtual reality scene according to the position and pose data comprises:
mapping the virtual reality scene to a spatial model, wherein the spatial model is established in a world coordinate system;
calculating a position and pose description of the user's viewing angle in the world coordinate system according to the position and pose data of the smart terminal; and
determining the intersection point of the user's viewing angle and the virtual reality scene in the spatial model according to the position and pose description.

4. The sensing and control method of claim 1, wherein the step of performing the corresponding operation on the display content positioned at the intersection point in the virtual reality scene comprises:
determining whether the intersection point coincides with a graphic control in the virtual reality scene;
further determining whether to receive a trigger signal when the intersection point coincides with the graphic control; and
outputting a touch operation signal to the graphic control when the trigger signal is received.

5. The sensing and control method of claim 4, wherein after the step of further determining whether to receive the trigger signal when the intersection point coincides with the graphic control, the sensing and control method further comprises:
outputting a hover operation signal to the graphic control when the trigger signal is not received.

6. The sensing and control method of claim 4, wherein the smart terminal is disposed in VR glasses, the VR glasses comprise at least one physical button, the physical button is disposed a touch screen of the smart terminal, and the physical button presses the touch screen of the smart terminal when the physical button of the VR glasses is pressed; and
the step of determining whether to receive the trigger signal comprises:
determining whether the touch screen of the smart terminal detects the trigger signal generated by the pressing of the physical button.

7. The sensing and control method of claim 1 wherein the position and pose data comprises at least one of data of position and data of pose.

8. The sensing and control method of claim 1, wherein the step of acquiring the position and pose data of the smart terminal comprises:
adjusting the virtual reality scene according to the position and pose data of the smart terminal.

9. A smart terminal, wherein the smart terminal comprises a processor and a storage device connected to the processor;
the storage device stores program instructions which are executed by the processor and intermediate data which is generated when the processor executes the program instructions;
the processor executes the program instructions to implement the following steps of:
displaying a virtual reality scene by a smart terminal worn on a user's head;
acquiring position and pose data of the smart terminal;
determining an intersection point of the user's viewing angle and the virtual reality scene according to the position and pose data; and
performing a corresponding operation on a display content positioned at the intersection point in the virtual reality scene.

10. The smart terminal of claim 9, wherein the step of determining the intersection point of the user's viewing angle and the virtual reality scene according to the position and pose data comprises:
mapping the virtual reality scene to a spatial model, wherein the spatial model is established in a world coordinate system;
calculating a position and pose description of the user's viewing angle in the world coordinate system according to the position and pose data of the smart terminal; and
determining the intersection point of the user's viewing angle and the virtual reality scene in the spatial model according to the position and pose description.

11. The smart terminal of claim 9, wherein the step of performing the corresponding operation on the display content positioned at the intersection point in the virtual reality scene comprises:
determining whether the intersection point coincides with a graphic control in the virtual reality scene;
further determining whether to receive a trigger signal when the intersection point coincides with the graphic control; and
outputting a touch operation signal to the graphic control when the trigger signal is received.

12. The smart terminal of claim 11, wherein after the step of further determining whether to receive the trigger signal when the intersection point coincides with the graphic control, the sensing and control method further comprises:
outputting a hover operation signal to the graphic control when the trigger signal is not received.

13. The smart terminal of claim 11, wherein the smart terminal is disposed in VR glasses, the VR glasses comprise at least one physical button, the physical button is disposed a touch screen of the smart terminal, and the physical button presses the touch screen of the smart terminal when the physical button of the VR glasses is pressed; and
the step of determining whether to receive the trigger signal comprises:
determining whether the touch screen of the smart terminal detects the trigger signal generated by the pressing of the physical button.

14. A device having a storage function, wherein the device comprises program instructions stored therein, and the program instructions are capable of being executed to implement the following steps of:
displaying a virtual reality scene by a smart terminal worn on a user's head;
acquiring position and pose data of the smart terminal;
determining an intersection point of the user's viewing angle and the virtual reality scene according to the position and pose data; and
performing a corresponding operation on a display content positioned at the intersection point in the virtual reality scene.

15. The device having the storage function of claim 14, wherein the step of determining the intersection point of the user's viewing angle and the virtual reality scene according to the position and pose data comprises:
determining a transformation relationship between the user' viewing angle and a predetermined reference direction of the smart terminal when the smart terminal is worn on the user's head;
determining a position and pose description of the predetermined reference direction of the smart terminal according to the position and pose data; and
determining a position and pose description of the user's viewing angle according to the position and pose description of the predetermined reference direction and the transformation relationship.

16. The device having the storage function of claim 14, wherein the step of determining the intersection point of the user's viewing angle and the virtual reality scene according to the position and pose data comprises:
mapping the virtual reality scene to a spatial model, wherein the spatial model is established in a world coordinate system;
calculating a position and pose description of the user's viewing angle in the world coordinate system according to the position and pose data of the smart terminal; and
determining the intersection point of the user's viewing angle and the virtual reality scene in the spatial model according to the position and pose description.

17. The device having the storage function of claim 14, wherein the step of performing the corresponding operation on the display content positioned at the intersection point in the virtual reality scene comprises:
determining whether the intersection point coincides with a graphic control in the virtual reality scene;
further determining whether to receive a trigger signal when the intersection point coincides with the graphic control; and
outputting a touch operation signal to the graphic control when the trigger signal is received.

18. The device having the storage function of claim 17, wherein after the step of further determining whether to receive the trigger signal when the intersection point coincides with the graphic control, the sensing and control method further comprises:
outputting a hover operation signal to the graphic control when the trigger signal is not received.

19. The device having the storage function of claim 17, wherein the smart terminal is disposed in VR glasses, the VR glasses comprise at least one physical button, the physical button is disposed a touch screen of the smart terminal, and the physical button presses the touch screen of the smart terminal when the physical button of the VR glasses is pressed; and
the step of determining whether to receive the trigger signal comprises:
determining whether the touch screen of the smart terminal detects the trigger signal generated by the pressing of the physical button.

20. The device having the storage function of claim 14, wherein the step of acquiring the position and pose data of the smart terminal comprises:
adjusting the virtual reality scene according to the position and pose data of the smart terminal.
